# EUROPEAN PATENT APPLICATION

(11) **EP 1 336 959 A1**
(43) Date of publication of application: **20.08.2003**
(21) Application number: 03250875.6
(22) Date of filing: 13.02.2003
(51) Int. Cl.: G11B 7/12

(54) **Optical pickup device**

(30) Priority: 13.02.2002 JP 2002034871
(71) Applicant: Pioneer Corporation, Tokyo-to (JP)
(72) Inventor: Tomisawa, Isao, c/o Pioneer Corporation, Tsurugashima-shi, Saitama-ken (JP); Minagawa, Noboru, c/o Pioneer Corporation, Tsurugashima-shi, Saitama-ken (JP); Hashimoto, Kazunobu, c/o Pioneer Corporation, Tsurugashima-shi, Saitama-ken (JP); Izawa, Masataka, c/o Pioneer Corporation, Tsurugashima-shi, Saitama-ken (JP); Sugiura, Satoshi, c/o Pioneer Corporation, Tsurugashima-shi, Saitama-ken (JP)
(74) Representative: Haley, Stephen

(57) **Abstract**

An optical pickup device for reading information recorded on an optical disc, the device having a semiconductor laser (1), a half mirror (5) and a light-receiving element (6). The semiconductor laser (1) and the half mirror (5) are attached to each other via a grating (3), and the light-receiving element (6) is attached on the surface of the half mirror (5).

## Description

The present invention relates to an optical pickup device having a light source, a forward/return optical path separating member and a light-receiving element for reading information recorded on an optical recording medium and, in particular, relates to an optical pickup device that is easy to adjust and that can achieve reduction in size/thickness of the device.

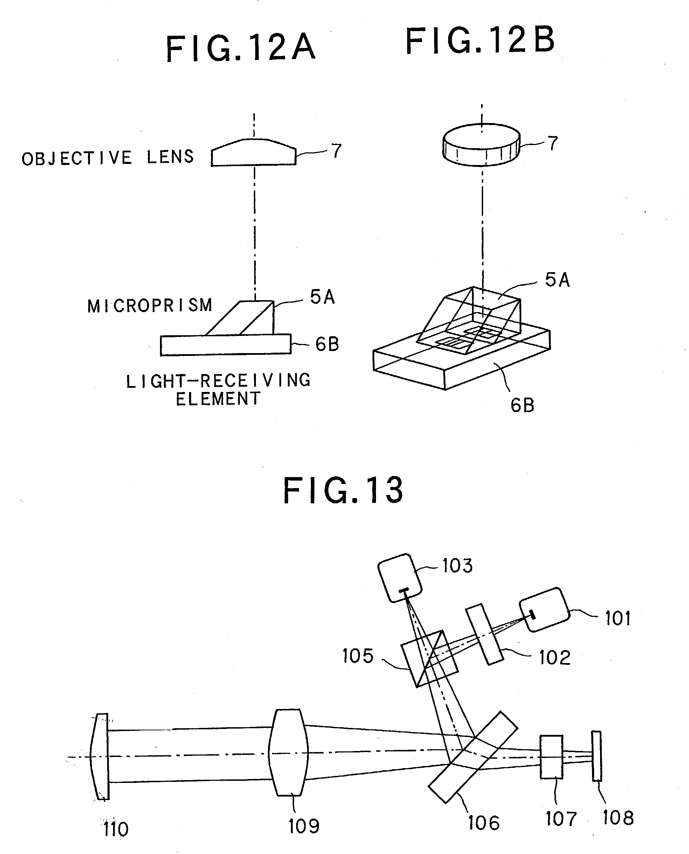

As a configuration of an optical pickup device used in a reproducing device for CDs (Compact Discs), DVDs (Digital Versatile Discs) or the like, one as shown in FIG. 13, for example, has been known. The optical pickup device shown in FIG. 13 comprises a laser light source 101 for CD, a grating 102 that separates laser light emitted from the laser light source 101 into three beams for detecting a tracking error, a laser light source 103 for DVD, a composite prism 105 that refracts laser light from the laser light source 101 while transmits laser light from the laser light source 103, a forward/return optical path separating mirror 106, a lens 107 for a focus function, a light-receiving element 108, a collimator lens 109 and an objective lens 110.

However, there has been a problem that inasmuch as optical components constituting an optical pickup device are configured as separate members, it is necessary to strictly adjust a positional relationship among the respective optical components, which makes the adjusting operation complicated. There has also been a problem that inasmuch as separate members are assembled to form an optical pickup device, it is difficult to achieve reduction in size/thickness of the optical pickup device, and further, an increase in cost is induced.

Therefore, it is an object of the present invention to provide an optical pickup device that does not require a complicate adjusting operation and further that can achieve reduction in size/thickness of the device.

The above object of the present invention can be achieved by an optical pickup device of the present invention for reading information recorded on an optical recording medium. The device is provided with a light source, a forward/return optical path separating member and a light-receiving element, wherein the light source and the forward/return optical path separating member are attached to each other directly or via another optical member.

According to the present invention, inasmuch as the light source and the forward/return optical path separating member are attached to each other directly or via another optical member, a positional relationship between the light source and the forward/return optical path separating member can be easily fixed to a desired positional relationship. Therefore, a bothersome adjusting operation after assembling the device becomes unnecessary, so that there can be obtained the optical pickup device that is easy to fabricate and low in cost. Further, inasmuch as the light source and the forward/return optical path separating member are integrated or united, reduction in size/thickness of the device can be achieved.

In one aspect of the present invention, the light source and the forward/return optical path separating member are attached to each other via a grating.

In another aspect of the present invention, the light source may comprise a CAN laser and a body containing therein the CAN laser. In this case, reduction in cost can be achieved by using a general purpose light source.

In further aspect of the present invention, the forward/return optical path separating member comprises opening limiting means which gives an opening limitation to light from the light source.

According to this aspect, even when a distance between the forward/return optical path separating member and the light source is set to be short, unnecessary incident light into the optical system can be prevented.

The above object of the present invention can be achieved by an optical pickup device of the present invention for reading information recorded on an optical recording medium. The device is provided with a light source, a forward/return optical path separating member and a light-receiving element, wherein the light receiving element is attached to the forward/return optical path separating member.

According to the present invention, inasmuch as the light-receiving element is attached onto the surface of the forward/return optical path separating member, a positional relationship between the forward/return optical path separating member and the light-receiving element can be easily fixed to a desired positional relationship. Therefore, a bothersome adjusting operation after assembling the device becomes unnecessary, so that there can be obtained the optical pickup device that is easy to fabricate and low in cost. Further, inasmuch as the forward/return optical path separating member and the light-receiving element are integrated or united, reduction in size/thickness of the device can be achieved.

The above object of the present invention can be achieved by an optical pickup device of the present invention for reading information recorded on an optical recording medium. The device is provided with a light source, a forward/return optical path separating member and a light-receiving element, wherein the light source and the forward/return optical path separating member are attached to each other directly or via another optical member, and the light receiving element is attached to said forward/return optical path separating member.

According to this optical pickup device, inasmuch as the light source and the forward/return optical path separating member are attached to each other directly or via another optical member, and further, the light-receiving element is attached onto the surface of the forward/return optical path separating member, a positional relationship among the light source, the forward/return optical path separating member and the light-receiving element can be easily fixed to a desired positional relationship. Therefore, a bothersome adjusting operation after assembling the device becomes unnecessary, so that there can be obtained the optical pickup device that is easy to fabricate and low in cost. Further, inasmuch as the forward/return optical path separating member and the light-receiving element are integrated or united, reduction in size/thickness of the device can be achieved. The forward/return optical path separating member and the light-receiving element may be closely contacted with each other or attached to each other via an air layer or another material.

In further aspect of the present invention, the light-receiving element may have a focus function.

According to this aspect, inasmuch as it is not necessary to employ an optical member for the purpose of a focus function in the optical system other than the light-receiving element, the adjusting operation after assembling the device can be easier, and the reduction in size/thickness of the device can be further achieved.

In further aspect of the present invention, the forward/return optical path separating member is a half mirror.

The half mirror may have a flat-plate shape or a substantially parallelogrammatic shape in section. In this case, the productivity of the half mirrors becomes excellent and thus the reduction in cost can also be achieved.

In the optical pickup device according to the present invention, "light-receiving element" may have or may not have the focus function.
FIG. 1 is a perspective view showing an optical pickup device according to a preferred embodiment of the present invention;
FIG. 2 is a sectional view of the optical pickup device of the preferred embodiment;
FIG. 3 is a diagram showing a configuration of an optical system of the optical pickup device of the preferred embodiment;
FIG. 4A is a plan view showing the optical IC device;
FIG. 4B is a sectional view taken along line X-X' in FIG. 4A;
FIG. 5 is a diagram showing an optical path of propagating light that propagates in an optical waveguide path;
FIG. 6 is a diagram showing an optical path of propagating light that propagates in the optical waveguide path;
FIG. 7 is a diagram showing an optical path of propagating light that propagates in the optical waveguide path;
FIG. 8 is a diagram showing an optical system that does not use either a grating or a collimator lens;
FIG. 9 is a diagram showing a case where a mounting angle of the optical IC device is changed;
FIG. 10 is a diagram showing a case where a shielding film is provided on a half mirror;
FIG. 11 is a diagram showing various forward/return optical path separating members;
Fig. 12A is a sectional view in which a focus function is given to a light-receiving element by a microprism;
FiG. 12B is a perspective view in which a focus function is given to the light-receiving element by the microprism;
FIG. 13 is a diagram showing a configuration of an optical system of a conventional optical pickup device.

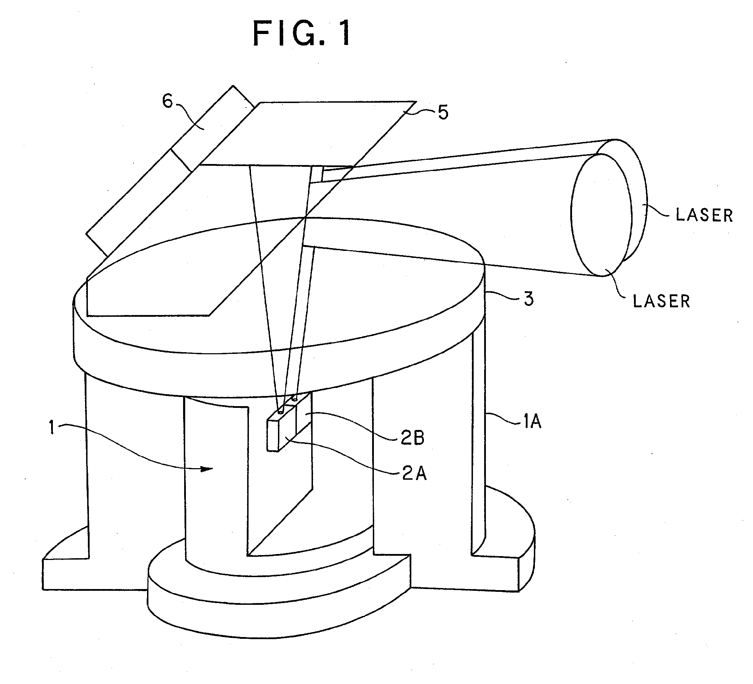

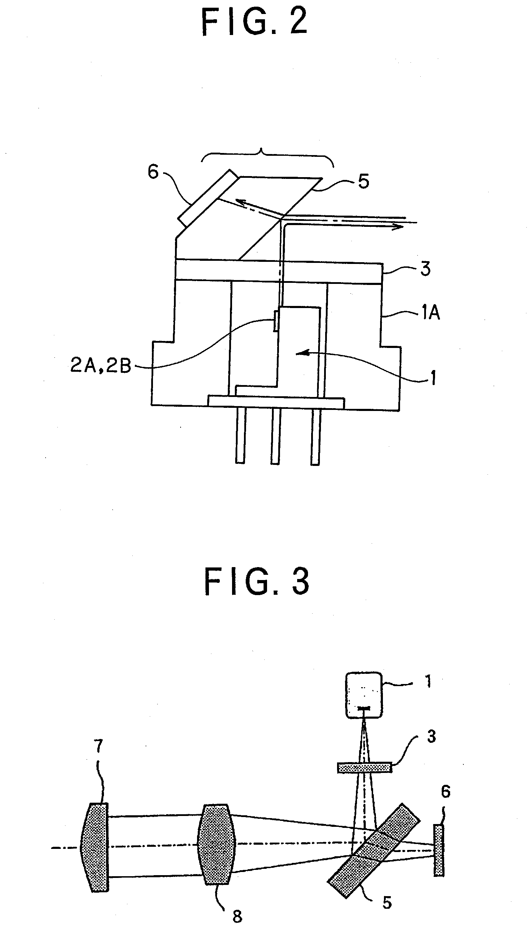

Now, referring to FIGS. 1 to 12, a preferred embodiment of an optical pickup device according to the present invention will be described. FIG. 1 is a perspective view showing the optical pickup device of this embodiment, FIG. 2 is a sectional view of the optical pickup device of this embodiment, and FIG. 3 is a diagram showing a configuration of an optical system of the optical pickup device of this embodiment.

As shown in FIGS. 1 and 2, the optical pickup device of this embodiment comprises a body 1A, a CAN semiconductor laser (light source) 1 having laser diodes 2A and 2B disposed in the body 1A, a grating 3 mounted on an upper surface of the body 1A, a half mirror 5 attached to the grating 3 and serving as a forward/return optical path separating member, and a light-receiving element 6 with a focus function attached to the surface of the half mirror 5. As appreciated, in FIG. 1, the interior of the semiconductor laser 1 is shown by cutting a portion of the body 1A for convenience.

As shown in FIGS. 1 to 3, laser light emitted from the laser diode 2A or 2B passes through the grating 3 and is reflected by the half mirror 5. From the laser diode 2A or 2B, laser light with a wavelength for CD or DVD is emitted depending on the kind of optical disc. The laser light with the CD wavelength is separated into three laser beams by the grating 3. On the other hand, the laser light with the DVD wavelength passes through the grating 3 without being subjected to diffraction due to a difference in wavelength. The separation of the CD laser light into three laser beams is required for carrying out tracking based on a three-spot method.

The laser light reflected from the half mirror 5 is applied to an optical disc (not shown) via an optical system including an objective lens 7 and a collimator lens 8 (see FIG. 3), and then the reflected light returns to the half mirror 5 so as to be refracted at a prescribed angle and enters the light-receiving element 6.

Now, a structure and operation of the light-receiving element 6 will be described.

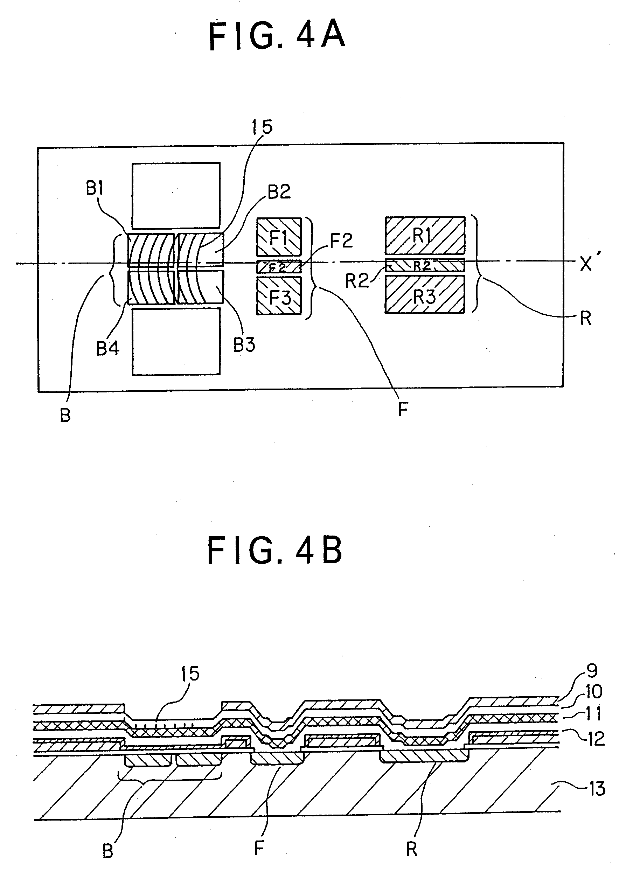

FIG. 4A is a plan view showing the light-receiving element 6, and FIG. 4B is a sectional view taken along line X-X' in FIG. 4A. The light-receiving element 6 is a light-receiving device formed on a semiconductor substrate, and is configured to have a focus function.

As shown in FIG. 4A and FIG. 4B, the light-receiving element 6 is formed by stacking in layers, a first light-receiving portion B, a second light-receiving portion F and a third light-receiving portions R, a lower clad layer 12, an optical waveguide path 11 provided on the lower clad layer 12 for transmitting laser light and also propagating laser light, a grating 15 formed on the optical waveguide path 11 for separating laser light into transmission light and waveguide light, an upper clad layer 10 and a protective layer 9, on a semiconductor substrate 13 in the order named.

As shown in FIG. 4A, the first light-receiving portion B located just under the grating 15 is divided into four, i.e. light-receiving elements B1, B2, B3 and B4. Similarly, the second light-receiving portion F is composed of light-receiving elements F1, F2 and F3, and the third light-receiving portion R is composed of light-receiving elements R1, R2 and R3.

The upper clad layer 10 and the lower clad layer 12 are formed of SOG (Spin On Glass), while the optical waveguide path 11 is formed of SiO₂. The protective layer 9 is formed of Al, which, however, is not provided just over the grating 15 as shown in FIG. 4B. This is because the protective layer 9 serves to prevent external unnecessary light from entering the light-receiving element 6. Therefore, all the light entering the optical IC device 6 enters from an upper portion of the grating 15.

The grating 15 is made of TiO₂ having a thickness of approximately 0.10ì m, and forms a grating coupler cooperatively with the optical waveguide path 11. The grating coupler transmits most of the incident light downward while propagates a portion of the incident light through the optical waveguide path 11 as waveguide light. Since, as described above, the grating 15 is configured to input the returned light from the optical disc into the optical waveguide path 11 for coupling, it is necessary to set the grating period to be approximately equal to or less than a wavelength of laser light to be used.

The light reflected from the optical disc and having passed through the half mirror 5 reaches the grating 15 formed in the light-receiving element 6. The first light-receiving portion B is provided just under the grating 15, so that a portion of the light is incident upon the first light-receiving portion B and converted into an electric signal. On the other hand, of the light having passed through the grating 15, the other light entering the optical waveguide path 11 and not directed toward the first light-receiving portion B just below is separated into light that reaches the second light-receiving portion F, and light that further propagates in the optical wavelength path 11 to reach the third light-receiving portion R.

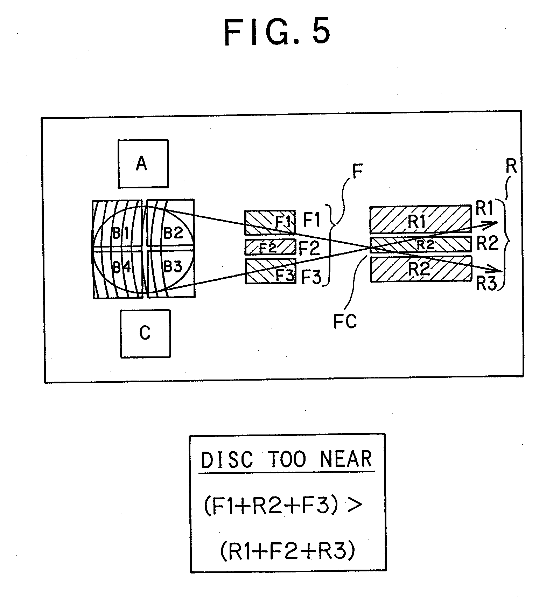

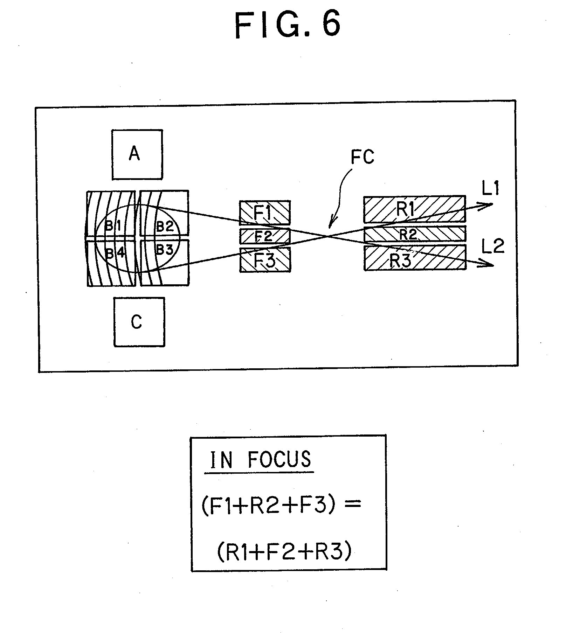

Now, referring to FIGS. 5 to 7, a deriving method for a focus error signal that is derived from the second and third light-receiving portions F and R will be described. FIGS. 5 to 7 corresponding to the plan view of the optical IC device 6 show the states of light propagating in the optical waveguide path 11. Among them, FIG. 6 is a diagram showing an optical path of propagating light when a focus of irradiated light relative to an optical information record carrier is matched.

As shown in FIG. 6, when the optical disc is in focus, a portion of reflected light from the optical disc propagates in the optical waveguide path 11 to reach the light-receiving elements F1, F2 and F3, while the remaining light further propagates in the optical waveguide path 11 to form a focus at an optical path crossing point FC short of the third light-receiving portion R, then enters the light-receiving elements R1, R2 and R3. The light-receiving elements F1 to F3 and R1 to R3 are photoelectric converting elements, and a focus error signal is derived based on (F1+R2+F3) - (R1+F2+R3). FIG. 6 shows a path of reflected light in the state where a light spot on the optical disc becomes minimum, wherein (F1+R2+F3) - (R1+F2+R3) = 0.

When the disc approaches the objective lens 7 from the state of FIG. 6, the focus position FC moves toward the side of the third light-receiving portion R as shown in FIG. 5, so that the received light intensity becomes greater at the second light-receiving portion F than at the third light-receiving portion R. Therefore, (F1+R2+F3)>(R1+F2+R3) is resulted.

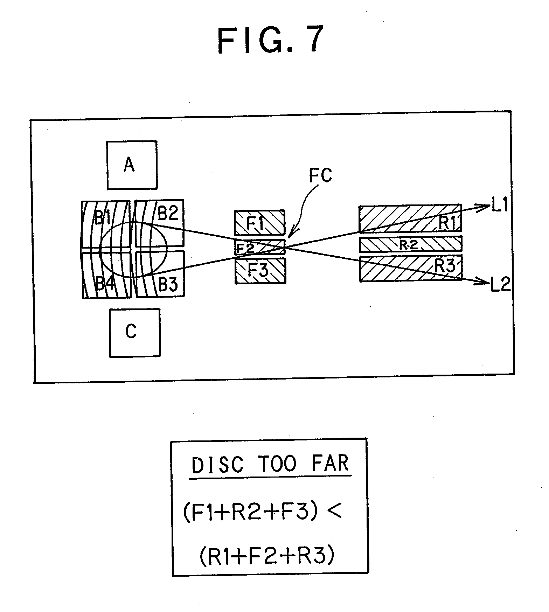

On the other hand, when the disc moves away from the objective lens 7 from the state of FIG. 6, the focus position FC moves toward the side of the second light-receiving portion F as shown in FIG. 7, so that (F1+R2+F3)<(R1+F2+R3) is resulted. In this manner, the position of the objective lens 7 can be adjusted at all times based on a focus error signal so as to optimize a distance between the optical disc and the objective lens 7, i.e. so as to establish (F1+R2+F3) = (R1+F2+R3). Since the configuration for driving the objective lens 7 based on a focus error signal is well known, explanation thereof is omitted.

As described above, in this embodiment, the grating 3 is attached on the upper surface of the body 1A, and further, the half mirror 5 is attached on the upper surface of the grating 3. In addition, the light-receiving element 6 is attached closely to the half mirror 5. Therefore, inasmuch as the semiconductor laser 1, the grating 3, the half mirror 5 and the light-receiving element 6 being components constituting the optical system are fixed integrally or unitedly via the body 1A, the complicate operation for adjusting the positional relationship among the components constituting the optical system is not required. Further, in the foregoing embodiment, the semiconductor laser 1, the grating 3, the half mirror 5 and the light-receiving element 6 are fixed mutually. Therefore, the state where the respective optical components are securely fixed at prescribed mounting angles can be easily realized.

Further, inasmuch as the semiconductor laser 1, the grating 3, the half mirror 5 and the light-receiving element 6 are integrated or united, the reduction in size/thickness of the device can be achieved, and further, the reliability of the optical system can be enhanced.

There is no limitation with respect to a method of fixation among the grating 3, the half mirror 5 and the semiconductor laser 1, and a method of fixation between the light-receiving element 6 and the half mirror 5. For example, these optical components may be fixed together by adhesion or by mechanical means such as screwing.

In the foregoing embodiment, the light-receiving element 6 is attached to the surface of the half mirror 5 serving as the forward/return optical path separating member. However, in the optical pickup device of the present invention, the forward/return optical path separating member and the light-receiving element may be closely contacted with each other, or may be attached together via another material such as adhesives or another member. They may also be attached together via an air layer. In this case, the thickness of the air layer is 10mm or less, and both members may be attached together, for example, via a suitable spacer for ensuring the air layer.

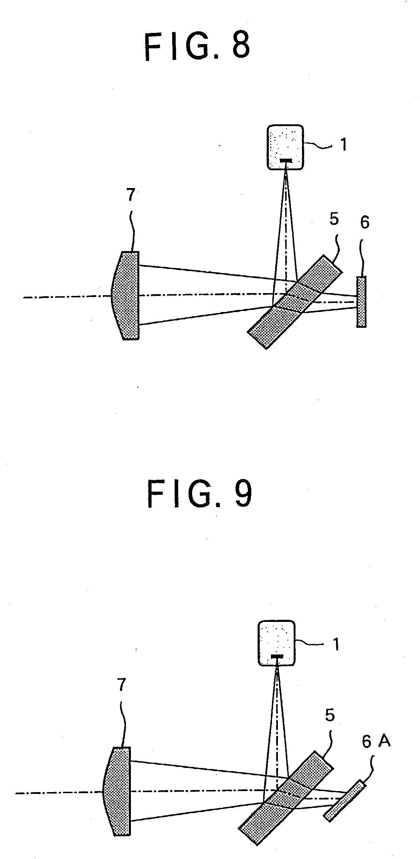

In the foregoing embodiment, the grating 3 is required for performing the tracking based on the three-spot method. However, in a dedicated pickup device for DVD reproduction, for example, the grating is not necessary. FIG. 8 shows an optical system that does not use either a grating or a collimator lens. In this case, it is advisable to attach the half mirror fixedly to the semiconductor laser by suitable means.

Further, the mounting angle of the optical IC device relative to the half mirror is not limited to that in the foregoing embodiment. For example, as shown in FIG. 9, the mounting angle of a light-receiving element 6A may be set to an angle that optically differs from that of the light-receiving element 6. It may be configured that the optical axis is incident perpendicularly or obliquely relative to the light-receiving element such as the optical IC device.

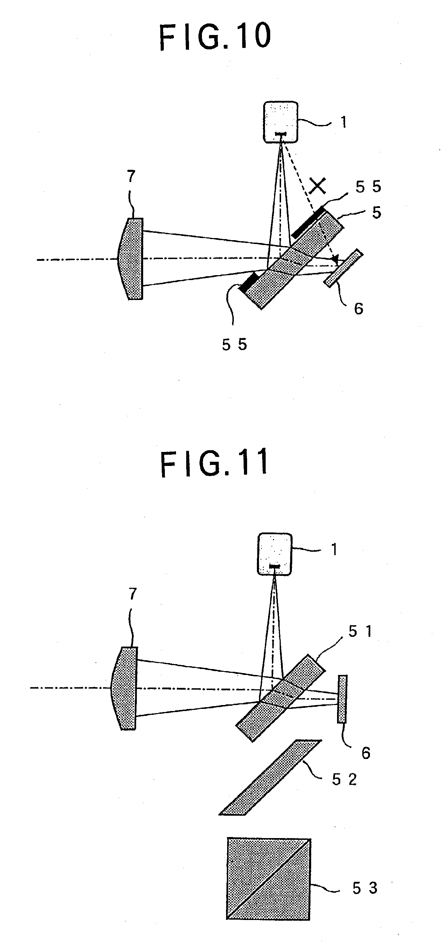

As shown in FIG. 10, a shielding film 55 may be provided on the half mirror 5 to limit an opening. In the optical pickup device according to the present invention, the light source such as the semiconductor laser 1 and the half mirror 5 tend to approximate to each other as compared with the conventional device, so that it is possible that unnecessary light (e.g. light beam X in FIG. 10) from the light source in a forward path enters the light-receiving element 6 via the half mirror 5. In view of this, in the configuration of FIG. 10, such unnecessary light is blocked by providing the opening limitation at the half mirror 5.

The shape of the half mirror is not limited to that in the foregoing embodiment, and further, the forward/return optical path separating member is not limited to the half mirror. As shown in FIG. 11, for example, a half mirror 51 of a flat-plate shape or a half mirror 52 having a parallelogrammatic shape in section may be used. Alternatively, a wedge-shaped half mirror, a laminated prism of one of various shapes, or the like may also be used. Further, a polarizing beam splitter 53 may also be used. In view of the productivity and the production cost, it is advantageous to use the half mirror 51 of the flat-plate shape or the half mirror 52 having the parallelogrammatic shape in section (the shape of the half mirror 5 is included).

As the optical system of the optical pickup device of the present invention, various configurations are applicable. For example, another optical component such as a grating or collimator lens may be suitably added at need. Further, the light source is not limited to that with two wavelengths, and a light source with a single wavelength or with three or more wavelengths may also be used. Nevertheless, it is considered that the optical pickup device of the present invention exhibits more advantages when such a light source is used that generates laser light with a plurality of wavelengths that tend to complicate the optical system.

In the foregoing embodiment, the light-receiving element with the focus function is shown as an example. However, a light-receiving element without such a focus function may also be used. FIG. 12 shows an example in which a focus function is given to a light-receiving element by a microprism, wherein FIG. 12A is a sectional view and FIG. 12B is a perspective view. In this example, an optical path length is divided into two by a microprism 5A, thereby to give a focus function to a light-receiving element 6B.

In the foregoing embodiment, the CAN type laser (CAN laser) is used. However, a chip laser may also be used.

The invention may be embodied in other specific forms without departing from the spirit or essential characteristics thereof.

## Claims

1. An optical pickup device for reading information recorded on an optical recording medium, the device comprising a light source (1), a forward/return optical path separating member (5) and a light-receiving element (6), **characterized in that**
the light source (1) and the forward/return optical path separating member (5) are attached to each other directly or via another optical member.

2. An optical pickup device according to claim 1, wherein the light source (1) and the forward/return optical path separating member (5) are attached to each other via a grating.

3. An optical pickup device according to claim 1 or 2, wherein the light source (1) comprises a CAN laser (2A, 2B) and a body (1A) containing therein the CAN laser.

4. An optical pickup device according to any one of claims 1 to 3, wherein the forward/return optical path separating member (5) comprises opening limiting means (55) which gives an opening limitation to light from the light source.

5. An optical pickup device for reading information recorded on an optical recording medium, the device comprising a light source (1), a forward/return optical path separating member (5) and a light-receiving element (6), wherein
the light receiving element (6) is attached to the forward/return optical path separating member (5).

6. An optical pickup device for reading information recorded on an optical recording medium, the device comprising a light source (1), a forward/return optical path separating member (5) and a light-receiving element (6), wherein
the light source (1) and the forward/return optical path separating member (5) are attached to each other directly or via another optical member, and
the light receiving element (6) is attached to said forward/return optical path separating member (5).

7. An optical pickup device according to any one of claims 1 to 6, wherein the light-receiving element (6) has a focus function.

8. An optical pickup device according to any one of claims 1 to 7, wherein the forward/return optical path separating member (5) is a half mirror.

9. An optical pickup device according to claim 8, wherein the half mirror has a flat-plate shape.

10. An optical pickup device according to claim 8, wherein the half mirror has a substantially parallelogrammatic shape in section.
